# EUROPEAN PATENT SPECIFICATION

(11) **EP 0 937 975 B1**
(45) Date of publication and mention of the grant of the patent: **18.09.2002**
(21) Application number: 99102398.7
(22) Date of filing: 08.02.1999
(51) Int. Cl.: G01N 1/06

(54) **Microtome**
Microtome
Microtome

(30) Priority: 18.02.1998 GB 9803425
(43) Date of publication of application: 25.08.1999
(73) Proprietor: THERMO SHANDON LIMITED, Runcorn Cheshire WA7 1PR (GB)
(72) Inventor: Temple, John, Chester Cheshire CH2 3HW (GB); Kerrod, Ian, Hawarden Flintshire CH5 3TS (GB)
(74) Representative: Howden, Christopher Andrew

(56) References cited:
- WO-A-97/26524
- DE-A- 19 528 180
- GB-A- 2 134 278
- GB-A- 2 145 241
- US-A- 4 625 608
- 'SORVALL MT6000 ULTRAMICROTOME' Product Information Brochure, DUPONT COMPANY, CLINICAL & INSTRUMENT SYSTEMS, USA, 1984 XP002104374

## Description

THIS INVENTION relates to microtomes, that is to say to devices used for cutting thin sections from specimens for, for example, microscopic examination. The invention relates, more particularly, to microtomes which are to some degree mechanised or automatic in operation.

Mechanised or automatic microtomes are known which comprise a rigid base, a knife holder secured to said base, a microtome knife secured in the knife holder and a specimen support, on which a specimen to be sectioned is mounted, the specimen support being mounted for movement relative to the base so as to cause a specimen mounted on the specimen support to execute a transverse movement with respect to the knife blade, appropriate to the cutting of slices or sections from the specimen. Generally, in such known microtomes, the specimen support is also mounted for advancing and retracting movement relative to the knife for the cutting of successive sections or slices from the specimen and for withdrawing the specimen holder from the region of the knife for mounting a fresh specimen and so on.

It is an object of the invention to provide improved means for ensuring reproducibility of the microtome knife angle with respect to the specimen to be sectioned, between replacements or other adjustments of the knife relative to the remainder of the microtome. It is known that, in operation of mechanised or automatic microtomes, in particular, different angles are required for the various plates or knives used to compensate for different facet angles, embedding mediums and materials to be sectioned. Routine practice requires the setting of only one angle on the knife holder, which angle can be maintained or reproduced when, for example, the knife holder is removed for cleaning or replaced with an alternative holder. In conventional microtomes, it is normal to utilise a knife holder having a base which is removable from the frame or base structure of the microtome and which is replaceable on such structure. Accordingly, in normal practice, the knife holder and its base are removed together from the remainder of the machine and replaced together, so that the knife angle is thereby retained. It is an object of the present invention, to provide a means of maintaining or reproducing a predetermined angle of a microtome knife when mounted in the microtome, which means is not confined to microtomes having knife holders with bases removable from the remainder of the microtome with the knife holder.

GB-A-2134278 discloses a microtome including a part-cylindrical knife holder or knife clamp which is rotatably mounted in a supporting base. The drawings in GB-A-2134278 show a datum at one end of the part-cylindrical knife holder and a juxtaposed gradation marking OF scale on the supporting base. There is no disclosure of any means for clamping the knife holder in any particular positions in relation to the supporting base.

GB-A-2145241 discloses a clamping mechanism for a microtome knife, including a knife holder provided with a convex bearing surface engaging a complementary bearing surface of a supporting base. The knife holder is held against the supporting base by a releasable clamping mechanism whereby the knife holder can be temporarily unclamped, the knife holder rotated relative to the base to adjust the angle of the knife blade, and the knife holder re-clamped in its adjusted position. However there is no means of ensuring that any particular angle of the knife blade can easily be reproduced after the clamping means has been unclamped and the knife holder moved.

In accordance with the invention, accordingly, there is provided a microtome comprising a knife holder and a knife holder support having cooperating arcuate bearing surfaces permitting angular movement of the knife holder relative to the knife holder support about the axis of curvature of said bearing surfaces with concomitant sliding movement of one of said arcuate surfaces over the other, releasable securing means 10,8 operable to pull the knife holder 12 against the knife holder support 11 and thereby to fixedly secure the knife holder 12 on the knife holder support 11, said releasable securing means being releasable to allow angular movement of the knife holder relative to the knife holder support, characterised in that a locating device 41,47,49 is carried by the component 12 providing one of these bearing surfaces, can be adjusted in position relative to the component 12 providing said one of said bearing surfaces, about the axis of curvature of said one of said bearing surfaces, and can be fixed in such adjusted position relative to the last mentioned component 12 independently of whether or not said releasable securing means 10,8 is released or whether the knife holder 12 is removed from the knife holder support or not, said locating device having a projecting element for engagement in a pit or slot provided on the component 11 providing the other of said arcuate bearing surfaces, to ensure that with said locating device fixed to said component 12 providing said one of said bearing surfaces, the angular position of the knife holder on the knife holder support 11 at which said locating device engages in said pit or slot can readily be established, with said releasable securing means released, by rotating the knife holder on the knife holder support until said projecting element engages in said pit or slot, whereafter the releasable securing means can be operated to secure the knife holder in said angular position on the knife holder support.

An embodiment of the invention is described below by way of example with reference to the accompanying drawings in which:-
FIGURE 1 is a view in vertical longitudinal section of part of a microtome embodying the invention,
FIGURE 2 is a perspective view of part of the microtome of Figure 1,
FIGURE 3 is an exploded detail view showing part of a knife angle setting mechanism,
FIGURES 4 and 5 are side elevation views showing the knife holder mounting of the microtome of Figures 1 to 3, Figure 5 showing a detail X partly in section,
FIGURE 6 is a view to an enlarged scale of the detail X in Figure 5,
FIGURE 7 is a partial view in section on the line VII-VII in Figure 1,
FIGURE 8 is a view in cross section along the line VIII-VIII in Figure 1,
FIGURE 9 is an exploded view of part of the microtome of Figures 1 to 8,
FIGURE 10 is an end view of the part shown in Figure 9, in an assembled condition,
FIGURE 11 is a side elevation view of the last-noted part in the assembled condition, and
FIGURE 12 is a schematic side elevation view of the microtome.

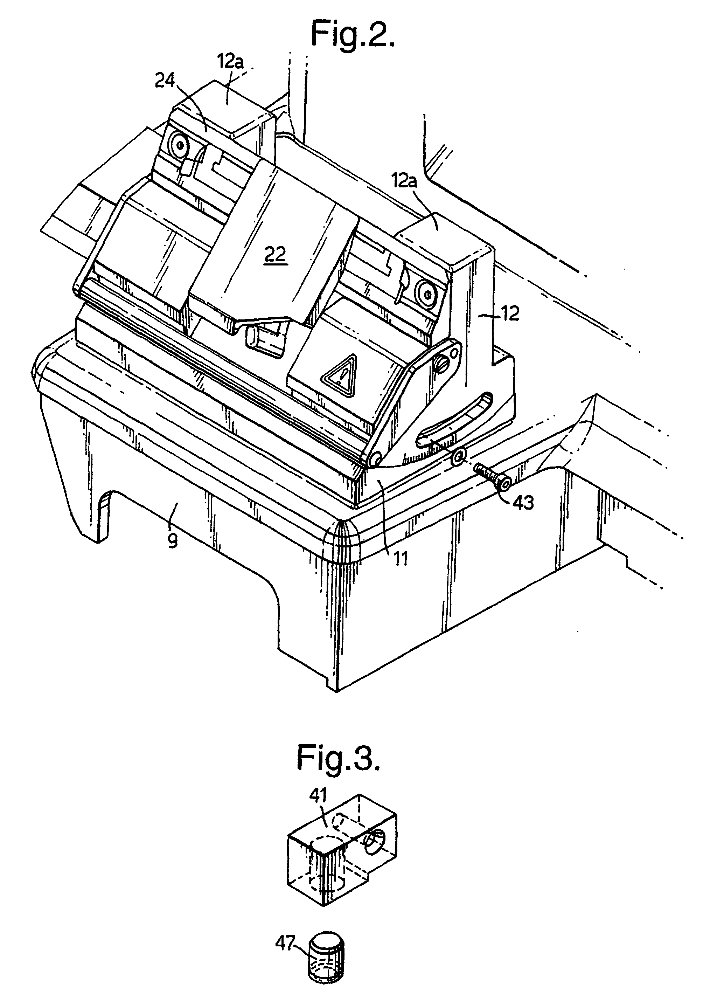

Referring to the drawings, a microtome comprises a main frame or base 9 which may, for example, be a metal casting, and upon which the remaining components of the microtome are mounted. At one end of the base 9 is mounted a knife holder assembly indicated generally at 20 and comprising a knife holder base 11 which is fixedly secured to the base 9 and on which is adjustably secured a knife holder block 12, on which a microtome knife proper, indicated at 22, is removably secured in manner known *per se*. As best shown in Figure 2, the knife holder block 12 affords two laterally spaced upstanding pillars 12a defining therebetween a space within which a specimen can be located and displaced, for sectioning by the knife 22, the cutting edge of which defines, in effect, the upper edge of an end wall of this space, which space is spanned by a specimen section deflector 24 secured to the pillars 12a.

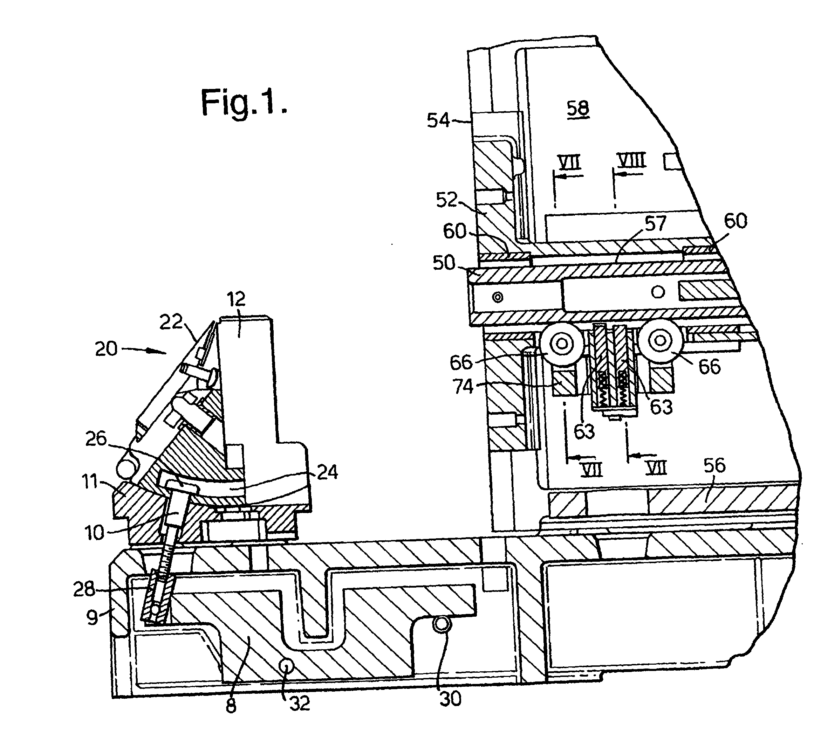

The knife holder base 11 may be integral with the base 9 or may be secured fixedly thereto, for example by bolts (as illustrated). The knife holder base 11 has an upwardly facing concave cylindrical bearing surface which mates with a complementary convex bearing surface forming the underside of the knife holder block 12, an arrangement permitting angular adjustment of the knife holder block 12 relative to the base 11 about a horizontal transversely extending axis. The centre of curvature of these cooperating part-cylindrical bearing surfaces coincides with the position of the cutting edge of the blade 22 so that angular adjustment of the block 12 with concomitant sliding rotational movement between the convex bearing surface on the block 12 and the concave bearing surface on the base 11 does not significantly alter the position of the cutting edge of the blade 22. Except when angular adjustment is required, the block 12 is fixedly secured on the base 11 by means of a retaining element or plunger 10 in the form of an elongate bolt which extends slidably through an aperture in frame 9 and through a bore in the base 11, through the mouth of a T-section slot 24 which extends within the knife holder block 12 along an arc about the centre of curvature of the convex lower face of the block, the slot 24 lying adjacent said lower face, the narrower mouth of the slot 24, defining the upright of the "T", opening onto said lower convex surface. The slot 24 extends from the forward end of the block 12. The bolt 10 has a neck portion extending through said narrow mouth and an enlarged head 26 within the slot 24, providing a peripheral flange which bears upon the ledges, defined by the slot 24, lying on opposite sides of the narrower portion of the slot through which the neck portion of bolt 10 extends. The lower end of the bolt 10 is screw-threadedly engaged in a nut 28 which is pivotally connected to the end of one arm of a lever 8 which is mounted within a recess in the underside of the base 9 and pivots on a transverse pivot pin 32 extending through the base 9. The lever 8 has another arm, remote from nut 28 and which is acted on by an eccentric 30 on a horizontal transversely extending shaft (not shown) which is rotatable manually or by motor means (not shown) for pivoting the lever 8 about the pivot 32, in the plane of Figure 1, anti-clockwise as viewed in the figure to draw the bolt 10 downwardly and thus pull the block 12 down firmly against the base 11, or clockwise to release the bolt 10 and lift the bolt 10 sufficiently to release the downward pressure on the edges of slot 24 and thus permit angular adjustment of the knife holder block 12 relative to the base 11. The arrangement described enables a range of similar knife holders 12 to be attached to the base and angled to achieve optimum sectioning performance, with the cutting edge of the blade being always at the centre of the radius of curvature of the mating surfaces of the block 12 and base 11 whereby said cutting edge is always at a fixed position in relation to the remainder of the microtome.

In order to allow ready re-establishment of the desired angular position of the block 12 and knife 22, relative to base 11, about the axis of curvature of the mating bearing surfaces of the block 12 and base 11, for example after the knife holder block 12 has been temporarily removed from the base 11 and replaced thereon, an adjustable locating device or "memory" feature is provided, as described below. Thus, located in a further slot extending arcuately about the centre of curvature of the cooperating bearing surfaces of the block 12 and base 11 and which slot likewise opens onto the bearing surface of block 12, is a slider block 41 shown in perspective in Figure 3. Block 41 has a transverse screw-threaded bore to receive a complementary screw-threaded shank of a bolt 43 which extends through an arcuate slot in the side face of the knife holder adjacent the slot which receives the block 41. The last-noted arcuate slot opens into the adjoining side wall of the slot which receives the block 41. The arcuate slot receiving the bolt 43 is rebated to receive the enlarged head of the bolt 43 which may, as illustrated, be of the Allen type, i.e. of the type having a polygonal - (typically hexagonal) section recess extending axially into the bolt head, to receive a key of complementary cross-section for turning the bolt. Thus, with the bolt 43 slackened, the block 41 can be adjusted to any desired one of a range of positions along the slot which accommodates it and can be secured in that position by tightening the bolt 43.

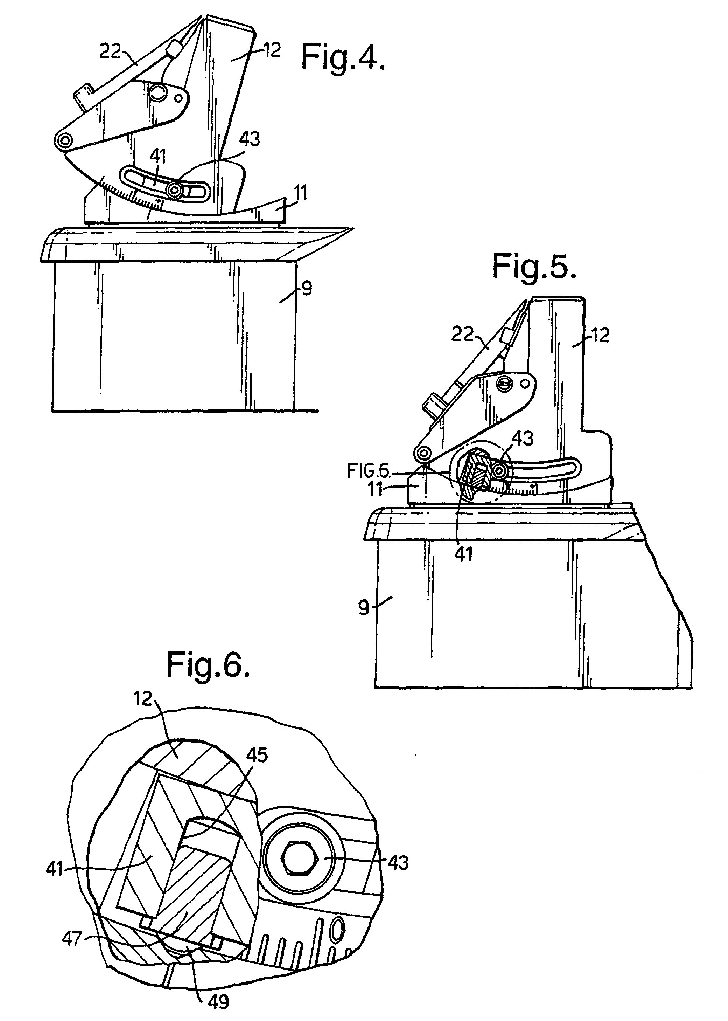

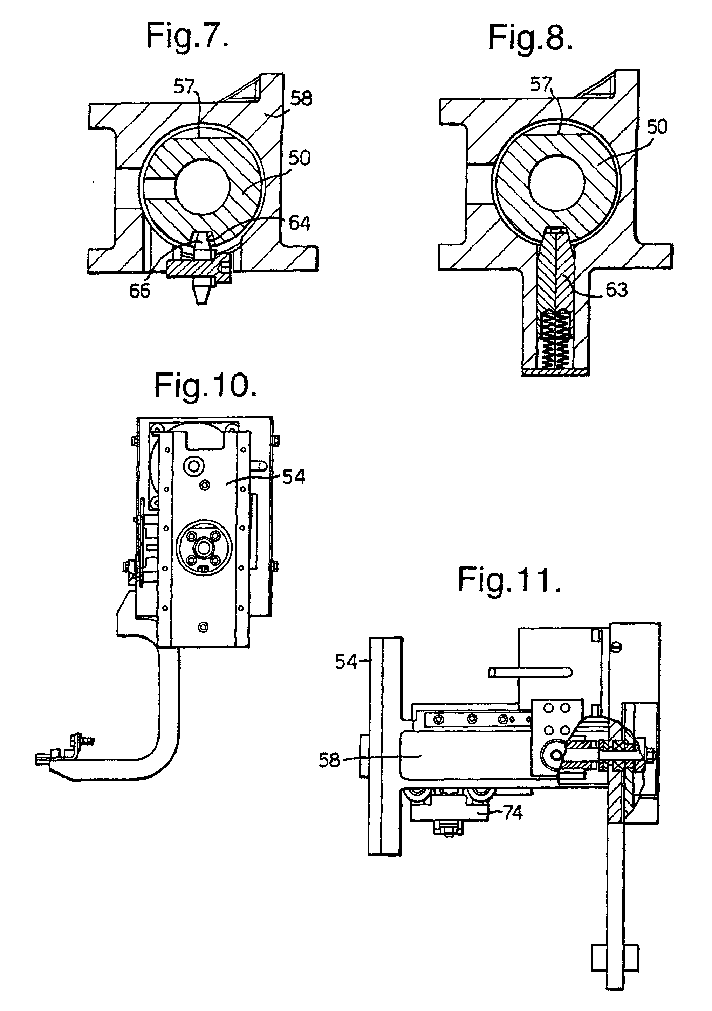

As best shown in Figure 6, the block 41 has a blind bore 45 extending upwardly from its lower surface, the bore 45 being screw-threaded and receiving a correspondingly screw-threaded insert 47 in which a steel ball 49 is held captive, together with a biasing spring (not shown) urging the ball 49 downwardly to project downwardly from the block 41 for engagement with the upwardly presented surface of the base 11. More particularly, the bearing surface of the base 11 has a pit or slot therein in which the ball 49 engages in one angular position of the knife holder. The last-noted angular position is, of course, determined by the position of the block 41 along its slot. In order to facilitate adjustment of the knife holder to a desired angle, the adjoining side face of the block 12 is graduated in degrees, as illustrated in Figures 4 to 6, and the adjoining edge face of the base 11 is provided with a datum mark cooperating with these graduations. It will be appreciated that, once the position of the block 41 in its slot has been set, the correct angular position of the block 12 with respect to the base 11 can be found simply by rotating the block 12 on the base 11 until the ball 49 engages in the slot or pit in the upper bearing surface of the base 11. The bolt 43 retains the block 41 in position in its slot when the block 12 is removed from the base 11 and thus serves to "memorise" the appropriate angular setting.

Referring again to Figure 1, the microtome includes a specimen carrier, shown only partly in Figure 1, the portion shown comprising a straight mounting tube 50 to the forward end of which is secured, in use, a specimen mounting arrangement (not shown but known *per se*), including a mounting plate for holding a specimen to be sectioned. In use of the microtome, the specimen to be sectioned is mounted on the mounting plate, in manner known *per se*, by means of a vice (not shown) and an orientation head (not shown), the vice and orientation head being likewise known *per se*. The specimen tube 50 extends with its longitudinal axis horizontally, through a support or carriage 52 which is movable in a vertical plane, parallel with the cutting edge of the blade 22, by means not shown, to effect sectioning of a specimen carried by the tube 50.

The carriage 52 includes a generally vertically extending end flange 54, (constituting the mounting plate referred to above), guided for vertical sliding movement in guideways at the front of a housing, indicated at 56, secured to the microtome base 9. The specimen tube 50 has, externally, the form of a smooth cylinder from which surface portions have been removed, a first such surface portion comprising an upper longitudinal portion defined by a flat 57, horizontally extending, extending longitudinally along the top of the tube, and a second such portion comprising a groove 64, extending along the bottom of the tube, diametrally opposite the flat 57, is a groove 64 of truncated inverted V-section. The tube 50 is guided for horizontal sliding movement towards and away from the microtome knife, through a horizontal bore in a stem portion 58 of the carriage 52, in two sintered cylindrical oil-filled bushes 60 fitted in respective ends of the bore in stem portion 58, adjacent respective open ends of said bore.

In the groove 64 run two wheels 66 which are spaced apart longitudinally of the stem 58. The wheels 66 are rotatably mounted, for rotation about respective horizontal axes, perpendicular to the longitudinal axis of the tube 50, in an undercarriage assembly 74 (see also Figure 9) extending downwardly from a fixed portion of the microtome structure. As shown in Figure 9, screw-threaded studs 75 extend downward from said fixed portion of the microtome through respective bores in a chassis of the undercarriage assembly 74, said chassis being supported and urged upwardly by a stack of disc spring washers 77 on each of said studs, retained by a respective nut 79 at the lower end of each said stud. Thus, the undercarriage assembly is urged, by the spring washers, upwardly against the specimen tube 50, which in turn is forced upwardly against the upper regions of the bores through the bushes 60 and, in particular, against the portions of these bushes lying directly adjacent the longitudinal flat 57 along the top of the specimen tube. As a result, and by virtue of the mutual inclination of the portions of the bushes engaging the specimen tube adjacent said flat 57, the specimen tube is centred in the bushes so as to resist lateral horizontal displacement therein. The wheels 66 on the undercarriage 74 rotate as the specimen tube 50 advances and retracts. The disc springs 77 allow some movement of the undercarriage 74 to compensate for any misalignment and any wear in the system. The flat 57 along the top of the specimen tube 50 has the effect that the specimen tube 50 is in fact supported on three localised areas - the two areas at the sides of the top flat 57 and the preloaded undercarriage wheels 66 running in the groove 64. As shown in Figure 7 and also in Figures 1 and 9, two plungers 63 extend vertically, are guided closely in respective vertical bores in the lower wall of the stem 58 and have tapered noses which engage respective side walls of the inverted V-section groove in the underside of the specimen tube 50. The plungers 63 are urged vertically upwardly by respective springs. These plungers 63 act to prevent rotational movement of the specimen tube about its longitudinal axis and take up any rotational play which the specimen tube 50 might otherwise have in its bearings 60.

The specimen tube 50 can be longitudinally advanced and retracted automatically, for example by means of a feed screw arrangement driven by an electric motor controlled by electronic control means, for making the feed movements between successive cutting strokes for cutting successive thin sections from a specimen and for making the relatively gross movements required to move a specimen from a position withdrawn from the knife at which the specimen is mounted, for example, to a position adjacent the knife in preparation for sectioning.

The preferred embodiment of the invention preferably has a block auto-load feature as described below.

The block auto-load feature is an automatic system to assist the user in the routine of mounting specimen blocks in the microtome at a safe distance from the knife, bringing the block to the knife position for trimming and/or sectioning, and returning the block to unload from the microtome at a safe distance from the knife, ready to re-load.

This auto-load is likely to be of particular use in rotary microtomes.

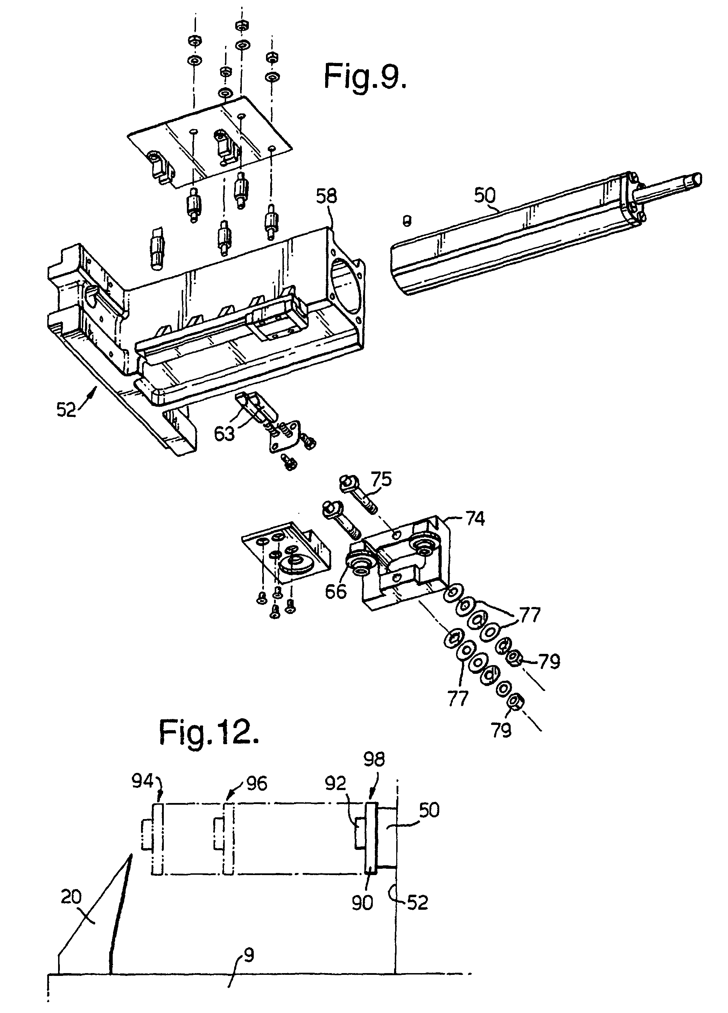

Referring to the schematic diagram forming Figure 12, the auto-load feature in the preferred embodiment is controlled by two keys (not shown) on a control unit (not shown) controlling a microcontroller or microcomputer (not shown) included in the control means referred to and which may be installed within the microtome casing. One of these two keys is a MEMORY key, used to set a position (94 in Figure 12) of the specimen mounting plate 90 (carried by the specimen tube 50) to which all succeeding specimens/blocks of the same depth may be advanced, to be ready for trimming/sectioning. The control system may include a facility for advancing and retracting the specimen tube 50 under manual control, and this may be used to place the specimen tube in a desired "memory" position 94, suitable for commencement of cutting of a specimen 92 mounted on plate 90. This position may then be stored by operation of the MEMORY key referred to. Once the memory position 94 is set, operation of an AUTO key allows the specimen to be rapidly advanced to the memory position, (if the current position of the specimen is anywhere behind the memory position), or rapidly retracted from the current specimen position (if the current position of the specimen is at or in front of the memory position), to a load/unload position 96. The amount retracted behind the memory position, i.e. the location of the load/unload position 96, may be set by the user. Indicators on the keys advise whether a memory position has been set, and whether the specimen is at or in front of this position or behind the memory position. The control means allows the tube 51 and with it the plate 90 and specimen 92, to be retracted further, when required, to a reset position 98.

In embodiments of the invention, the chosen knife angle for sectioning can be retained when the knife holder is moved or removed and replaced. Different angles are required for the various blades and knives used to compensate for different facet angles, embedding mediums and materials to be sectioned. Routine use requires the setting of only one angle on the knife holder which can be "remembered" when the knife holder is removed for cleaning or replaced with an alternative holder. The fixed knife position feature means that only the knife holder is removed whereas most microtomes have a removable base which means that the base and top are removed together hence retaining the knife angle position.

The fixed knife position feature referred to means that the knife holder base is fixedly attached to the structure of the microtome.

The knife holder base is the platform for mounting a range of knife holders and its stability is critical to the sectioning performance of the microtome. By bolting down this part to the microtome, for example, the knife holder mounted on it is more stable leading to improved sectioning performance.

Other, known, microtomes have a knife holder or knife holder base that can be moved forward and backward relative to the specimen on a track or dovetail to which it is then clamped.

The angular adjustability of the knife holder 12 on knife holder base 11 allows a range of knife holders 12 to be attached to the base and angled to achieve optimum sectioning performance, with the cutting point of the blade at the centre of the radius and hence always at a fixed position on the microtome.

The knife angle position memory feature enables a chosen knife angle to be set on the knife holder such that when it is removed and replaced it can easily be reset to the same angle.

A knife holder, whether it be for disposable blades or solid knives, can be typically set across a wide angle. Those on the preferred embodiment allow 15 degrees of adjustment. This range is available to accommodate different types of blades and knives which can have a range of facet angles for the knife edge.

Different facet angles typically require the knife to be set at different angles to the specimen to be sectioned. If the wrong knife angle is set on the knife holder it may have a detrimental effect on the sectioning performance.

A microtome user will typically use one blade/knife type for the majority or work. The user will set the knife angle position memory feature to suit this blade/knife type.

At the end of a sectioning session there will be much debris from the sectioning process around the knife area. It is usual to remove the knife holder to allow better access for cleaning. Another reason for removing the knife holder may be to fit another type. If there were no position memory feature when the knife holder was replaced the angle would have to be reset by remembering what the correct angle setting is or else by carrying out some sectioning and adjusting the angle to suit. The knife angle position memory feature on the other hand enables the correct knife angle to be easily reset.

The preferred embodiment of microtome described with reference to, and shown in, the accompanying drawings, can be used with a range of knife holders which all fit on one common knife holder base on the instrument. The different knife holders hold different types of knives which are used for sectioning different specimen types.

On the majority of known microtomes, as well as angular adjustment of the knife holder being possible, the knife holder base can normally be slid forwards and backwards for additional adjustment. This generally means that the knife holder base can be removed, with the knife holder still attached, by sliding it off the end of its adjustment guides. The knife can therefore be removed and replaced without changing the knife angle. This is not possible with the preferred embodiment of the invention since the knife holder base is permanently fixed to the instrument. The knife holder can therefore only be removed by separating it from the knife holder base which, but for the knife angle position memory feature described, would mean that the knife angle setting would be lost.

In the preferred embodiment, in order to save the knife angle once the knife holder has been set to the required position and locked in position, the screw 43 in the side of the knife holder is released using an Allen key and the screw and with it the block 41 carrying the spring plunger 47, 49, is slid along its slot until the ball spring plunger 49 is felt to engage in the knife holder base slot, after which the screw 43 is re-tightened.

The specimen tube mounting arranged used in the preferred embodiment enables the stability of the specimen to be maintained for sectioning over the full operating travel of the specimen tube. As noted above, in the preferred form of the microtome, the specimen to be sectioned is mounted, by means of a vice and orientation head, on a mounting plate secured to the specimen tube. The movement of the specimen tube backwards and forwards controls the thickness of sections produced by the instrument. The stability of the specimen tube within the instrument is critical to the production of good quality sections. Any large deflections in the specimen tube due to cutting forces can have a detrimental effect on sectioning performance.

The mounting method described with reference to the drawings ensures that the tube 50 is still held rigid when it is fully advanced. This is particularly necessary for the preferred embodiment as the knife position is fixed. The specimen must be advanced to the knife and so there is no way of controlling how far the specimen tube is advanced. Other, known, microtomes typically have a movable knife holder so that the knife can be moved to the specimen and hence sectioning can take place with the tube extended a minimum amount.

## Claims

1. A microtome comprising a knife holder and a knife holder support having cooperating arcuate bearing surfaces permitting angular movement of the knife holder relative to the knife holder support about the axis of curvature of said bearing surfaces with concomitant sliding movement of one of said arcuate surfaces over the other, releasable securing means (10,8) operable to pull the knife holder (12) against the knife holder support (11) and thereby to fixedly secure the knife holder (12) on the knife holder support(11), said releasable securing means being releasable to allow angular movement of the knife holder relative to the knife holder support, **characterised in that** a locating device (41,47,49) is carried by the component (12) providing one of these bearing surfaces, can be adjusted in position relative to the component (12) providing said one of said bearing surfaces, about the axis of curvature of said one of said bearing surfaces, and can be fixed in such adjusted position relative to the last mentioned component (12) independently of whether or not said releasable securing means (10,8) is released or whether the knife holder (12) is removed from the knife holder support or not, said locating device having a projecting element for engagement in a pit or slot provided on the component (11) providing the other of said arcuate bearing surfaces, to ensure that with said locating device fixed to said component (12) providing said one of said bearing surfaces, the angular position of the knife holder on the knife holder support (11) at which said locating device engages in said pit or slot can readily be established, with said releasable securing means released, by rotating the knife holder on the knife holder support until said projecting element engages in said pit or slot, whereafter the releasable securing means can be operated to secure the knife holder in said angular position on the knife holder support.

2. A microtome according to claim 1 wherein said pit or slot is provided in one of said arcuate bearing surfaces and said locating device includes a block (41) secured to the said components providing the other of said cooperating arcuate bearing surfaces, said locating element (49) being mounted in said block for displacement towards and away from said component providing the other of said bearing surfaces, a spring accommodated in said block (41) urging said element towards said arcuate bearing surface having said pit or slot, wherein said block is secured to said arcuate bearing surface by releasable securing means allowing, in a released condition, movement of the locating device, relative to said arcuate bearing surface to which it is releasably secured, angularly about the centre of curvature of said arcuate bearing surface, said securing means being operable to fix the block (41) to said arcuate bearing surface provided by the knife holder (12) or knife holder support (11) in any of a range of such angular positions.

3. A microtome according to claim 2, wherein said block (41) is located in a first slot extending arcuately about the centre of curvature of said arcuate bearing surfaces, adjacent a side face of said component carrying said locating element, said first slot opening onto said arcuate bearing surface and a part of said component carrying said locating element between said side face and said first slot forming a side wall of the first slot, and wherein a second arcuate slot, centered about said centre of curvature, is formed through said side wall, said releasable securing means comprising a screw (43) extending through said second arcuate slot, and having a head, on the side of said side wall remote from said first slot, which head is enlarged with respect to the width of said second slot, said head being accessible when the knife holder (12) has its bearing surface engaged with that of the knife holder support (11) whereby, with the screw loosened, the block 41 can be moved along said first slot and whereby the block can be fixed in a desired position along said first slot by tightening said screw.

## Patentansprüche

1. Ein Mikrotom mit einem Messerhalter und einem Messerhalterträger, die zusammenwirkende gewölbte Lagerflächen aufweisen, die eine Winkelbewegung des Messerhalters relativ zum Messerhalterträger um die Krümmungsachse besagter Lagerflächen mit begleitender Gleitbewegung einer der gewölbten Flächen über der anderen erlauben, wobei ein lösbares Sicherungsmittel (10, 8) betreibbar ist, um den Messerhalter (12) gegen den Messerhalterträger (11) zu ziehen und dadurch den Messerhalter (12) auf dem Messerhalterträger (11) fest zu sichern, wobei das lösbare Sicherungsmittel lösbar ist, um eine Winkelbewegung des Messerhalters relativ zum Messerhalterträger zu erlauben, **dadurch gekennzeichnet, daß** eine Positioniereinrichtung (41, 47, 49) von der Komponente (12) getragen wird, die eine dieser Lagerflächen liefert, in einer Position relativ zur Komponente (12), die besagte eine der Lagerflächen liefert, um die Krümmungsachse besagter einer der Lagerflächen eingestellt werden kann und in der derart eingestellten Position relativ zur zuletzt genannten Komponente (12) unabhängig davon, ob besagtes lösbares Sicherungsmittel (10, 8) gelöst ist oder nicht oder der Messerhalter (12) von dem Messerhalterträger entfernt ist oder nicht, festgesetzt werden kann, wobei besagte Positioniereinrichtung ein vorspringendes Element zum Eingriff in eine Vertiefung bzw. einen Schlitz aufweist, die/der an der Komponente (11) vorgesehen ist, die die andere der gewölbten Lagerflächen liefert, um sicherzustellen, daß mit der an besagter Komponente (12), die besagte eine besagter Lagerflächen liefert, befestigten Positioniereinrichtung die Winkelposition des Messerhalters auf dem Messerhalterträger (11), an der besagte Positioniereinrichtung in besagte Vertiefung bzw. besagten Schlitz eingreift, mit gelöstem besagtem Sicherungsmittel durch Drehen des Messerhalters auf dem Messerhalterträger, bis besagtes vorspringendes Element in besagte Vertiefung bzw, Schlitz eingreift, leicht hergestellt werden kann, wonach das lösbare Sicherungsmittel betätigt werden kann, um den Messerhalter in besagter Winkelposition auf dem Messerhalterträger zu sichern.

2. Ein Mikrotom nach Anspruch 1, worin besagte Vertiefung bzw. besagter Schlitz in einer besagter gewölbter Lagerflächen vorgesehen ist und besagte Positioniereinrichtung einen Block (41) enthält, der an den Komponenten gesichert ist, die die andere der zusammenwirkenden gewölbten Lagerflächen bilden, wobei das Positionierelement (49) in besagtem Block zur Verschiebung zu besagter Komponente und davon weg montiert ist, die die andere besagter Lagerflächen liefert, wobei eine Feder in besagtem Block (41) untergebracht ist, die besagtes Element zu besagter gewölbter Lagerfläche mit besagter Vertiefung bzw. besagtem Schlitz zwingt, worin besagter Block durch ein lösbares Sicherungsmittel an besagter gewölbter Lagerfläche gesichert ist, das, in einem gelöstem Zustand, eine Bewegung der Positioniereinrichtung relativ zu besagter gewölbter Lagerfläche, an der sie lösbar gesichert ist, im Winkel um die Mitte der Krümmung besagter gewölbter Lagerfläche erlaubt, wobei besagtes Sicherungsmittel betreibbar ist, um den Block (41) an von dem Messerhalter (12) oder Messerhalterträger (11) bereitgestellter besagter gewölbter Lagerfläche in irgendeiner eines Bereiches von derartigen Winkelpositionen zu befestigen.

3. Ein Mikrotom nach Anspruch 2, worin besagter Block (41) in einem ersten Schlitz positioniert ist, der sich bogenförmig um die Mitte der Krümmung besagter gewölbter Lagerflächen, benachbart zu einer Seitenfläche besagter das Positionierelement tragendenden Komponente, erstreckt, wobei besagter erster Schlitz sich auf besagter gewölbter Lagerfläche öffnet und ein Teil besagter das Positionierelement tragenden Komponente zwischen besagter Seitenfläche und besagtem ersten Schlitz eine Seitenwand des ersten Schlitzes bildet, und worin ein zweiter gewölbter Schlitz, der um das Krümmungszentrum zentriert ist, durch besagte Seitenwand ausgebildet ist, wobei das lösbare Sicherungsmittel eine Schraube (43) umfaßt, die sich durch den zweiten bogenförmigen Schlitz erstreckt und einen Kopf auf der Seite der Seitenwand fern von besagtem ersten Schlitz aufweist, wobei der Kopf in Bezug auf die Breite des zweiten Schlitzes vergrößert ist, wobei der Kopf zugänglich ist, wenn die Lagerfläche des Messerhalters (12) mit derjenigen des Messerhalterträgers (11) in Eingriff steht, wodurch mit der gelösten Schraube der Block (41) entlang besagten ersten Schlitzes bewegt werden kann und wodurch der Block in einer gewünschten Position entlang besagten ersten Schlitzes durch Anziehen besagter Schraube befestigt werden kann.

## Revendications

1. Microtome, comprenant un porte-lame et un support de porte-lame comportant des surfaces d'appui arquées qui coopèrent et permettent un mouvement angulaire du porte-lame par rapport au support de porte-lame autour de l'axe de courbure desdites surfaces d'appui avec un mouvement de glissement concomitant de l'une desdites surfaces arquées sur l'autre, un moyen de fixation pouvant être relâché (10, 8) qui peut être actionné pour tirer le porte-lame (12) contre le support de porte-lame (11) et fixer ainsi solidement le porte-lame (12) sur le support de porte-lame (11), ledit moyen de fixation pouvant être relâché pour permettre un mouvement angulaire du porte-lame par rapport au support de porte-lame, **caractérisé en ce qu'**un dispositif de positionnement (41, 47, 49) est porté par l'élément (12) fournissant une de ces surfaces d'appui, sa position par rapport à l'élément (12) fournissant ladite une desdites surfaces d'appui pouvant être ajustée autour de l'axe de courbure de ladite une desdites surfaces d'appui et **en ce qu'**il peut être fixé dans une telle position ajustée par rapport à l'élément (12) qui vient d'être mentionné, indépendamment du fait que ledit moyen de fixation pouvant être relâché (10, 8) soit ou non relâché ou du fait que ledit porte-lame (12) soit ou non retiré du support de porte-lame, ledit dispositif de positionnement ayant un élément en saillie destiné à s'engager dans un trou ou une fente prévu sur l'élément (11) fournissant l'autre desdites surfaces d'appui arquées pour garantir que, lorsque ledit dispositif de positionnement est fixé sur ledit l'élément (12) fournissant ladite une desdites surfaces d'appui, la position angulaire du porte-lame sur le support de porte-lame (11), dans laquelle ledit dispositif de positionnement est engagé dans ledit trou ou fente, peut être aisément établie, lorsque ledit moyen de fixation pouvant être relâché est relâché, en tournant le porte-lame sur le support de porte-lame jusqu'à ce que ledit élément en saillie s'engage dans ledit trou ou fente, après quoi ledit moyen de fixation pouvant être relâché peut être actionné pour bloquer le porte-lame dans ladite position angulaire sur le support de porte-lame.

2. Microtome selon la revendication 1, dans lequel ledit trou ou fente est placé dans l'une desdites surfaces d'appui arquées et ledit dispositif de positionnement comprend un bloc (41) fixé sur lesdits éléments fournissant l'autre desdites surfaces d'appui arquées qui coopèrent, ledit élément de positionnement (49) étant monté dans ledit bloc pour s'approcher et s'éloigner dudit élément fournissant l'autre desdites surfaces d'appui, un ressort logé dans ledit bloc (41) poussant ledit élément vers ladite surface d'appui arquée comportant ledit trou ou fente, dans lequel ledit bloc est fixé sur ladite surface d'appui arquée par le moyen de fixation pouvant être relâché permettant, en état relâché, un mouvement angulaire du dispositif de positionnement, par rapport à ladite surface d'appui arquée sur laquelle il est fixé de façon à pouvoir être relâché, autour du centre de courbure de ladite surface d'appui arquée, ledit moyen de fixation pouvant être actionné pour fixer le bloc (41) sur ladite surface d'appui arquée fournie par le porte-lame (12) ou le support de porte-lame (11) dans une position angulaire quelconque d'une plage de positions angulaires.

3. Microtome selon la revendication 2, dans lequel ledit bloc (41) est situé dans une première fente s'étendant en arc autour du centre de courbure desdites surfaces d'appui arquées, adjacente à une face latérale dudit élément portant ledit élément de positionnement, ladite première fente s'ouvrant sur ladite surface d'appui arquée et une partie dudit élément portant ledit élément de positionnement entre ladite face latérale et ladite première fente formant une paroi latérale de la première fente, et dans lequel une deuxième fente arquée, centrée autour dudit centre de courbure, est formée à travers ladite paroi latérale, ledit moyen de fixation pouvant être relâché comprenant une vis (43) s'étendant à travers ladite deuxième fente arquée et pourvue d'une tête, sur le côté de ladite paroi latérale distant de ladite première fente, laquelle tête est plus grande que la largeur de ladite deuxième fente, ladite tête étant accessible lorsque la surface d'appui du porte-lame (12) est engagée avec celle du support de porte-lame (11), ce qui fait que, lorsque la vis est desserrée, le bloc (41) peut être déplacé le long de ladite première fente et qu'il peut être fixé dans une position désirée le long de ladite première fente en serrant ladite vis.
